# EUROPEAN PATENT APPLICATION

(11) **EP 2 940 646 A1**
(43) Date of publication of application: **04.11.2015**
(21) Application number: 13834287.8
(22) Date of filing: 16.12.2013
(51) Int. Cl.: G06Q 30/06, G06Q 50/06

(54) **ELECTRICITY TRADING SYSTEM AND SERVICE SYSTEM PROVIDED WITH MARKET**

(30) Priority: 27.12.2012 JP 2012284661
(71) Applicant: Kabushiki Kaisha Toshiba, Minato-ku Tokyo 105-8001 (JP)
(72) Inventor: MAEGAWA, Tomonori, Tokyo 105-8001 (JP); MATSUZAWA, Shigeo, Tokyo 105-8001 (JP); KANEKO, Yu, Tokyo 105-8001 (JP); SHIMAOKA, Koichi, Tokyo 105-8001 (JP); IINO, Yutaka, Tokyo 105-8001 (JP)
(74) Representative: Moreland, David
(86) International application number: PCT/JP2013/083562
(87) International publication number: WO 2014/103766

(57) **Abstract**

An electricity trading system is provided which accomplishes an effect of reducing the risk of electricity tightness even if a large number of consumers participate a trading. The electricity trading system according to an embodiment of the present disclosure incudes a bid acceptor accepting bid information containing a bidder ID, a bid sorting processor sorting buying bid information among the bid information accepted by the bid acceptor into multiple groups based on a preference or a bidder kind associated with the bidder ID, and a contracting processor performing a process of making a contract between a buying bid indicated by the buying bid information sorted in a first group among the multiple groups and a selling bid, and a process of making a contract between a non-contracted and left selling bid and a buying bid indicated by the buying bid information sorted in a following group.

## Description

### TECHNICAL FIELD

The present disclosure relates to an electricity trading system that carries out a sales transaction associated with electricity through a communication network like the Internet, and a market providing type service system including the same.

### BACKGROUND ART

Recently, together with a tendency of the electricity deregulation, a trading conformation becomes popular which sells electricity generated by a specific-scale electric power supplier (PPS: Power Producer and Supplier) to a third party through power distribution grids owned by a general electric power supplier. Under such a circumstance, a development of a technology is advancing which establishes a market for further flexible trading on electricity as merchandise.

For example, Patent Document 1 discloses a contract processing method which sets, in an electricity trading, a contract quantity of a trading order to maximize the contribution to society in consideration of constraints of an electricity system, such as the transmission loss rate of electricity and the wheeling costs.

In addition, Patent Document 2 discloses an electricity trading method utilizing an electric certificate that describes the payment duty on electricity. Execution of the electronic trading in the form of the electric certificate enables an improvement of the simultaneity of electricity supply/demand in an electricity system.

### CITATION LIST

### PATENT LITERATURES

Patent Literature 1: JP 2004-272441 A
Patent Literature 2: JP 2003-122956 A

### SUMMARY OF INVENTION

### TECHNICAL PROBLEM

The above-explained conventional electricity trading system is a system that allows a generated electricity quantity (posiwatt) to be distributed as trading merchandise, and is not based on a presumption that trading merchandise like an electricity reduction (negawatt) is distributed. Hence, it is difficult to distinguish a trade on the purpose of the retailing of electricity by an electric power supplier and a trade on the purpose of the reduction of electricity consumption by a consumer.

The negawatt does not utilize an electricity system in practice, and has a characteristic such that it facilitates a consumer to participate a trade. Hence, when the negawatt is subjected to a trade as merchandise, it is expected that a large number of consumers who are the final users participate an electricity trading market.

According to the electricity trading system that is not capable of distinguish an electric power supplier and a consumer when making a contract like the conventional technology, even if the electric power supplier makes a buying bid, a contract by a buying bid from a large number of consumers highly possibly wins, and thus it is difficult to avoid an electricity supply tightness.

The present disclosure has been made in view of the aforementioned technical problems, and it is an objective of the present disclosure to provide an electricity trading system and a market providing type service system including the same which accomplish an advantage of reducing the risk of an electricity supply tightness even if a large number of consumers participate a trading so as to promote the deregulation of electricity and to maintain a stable electricity supply.

### SOLUTION TO PROBLEM

To accomplish the above objective, an embodiment of the present disclosure relates to an electricity trading system that employs the following structure:
(1) a bid acceptor that accepts bid information containing a bidder ID;
(2) a bid information sorting processor that sorts buying bid information among the bid information accepted by the bid acceptor into a plurality of groups based on a preference associated with the bidder ID or a bidder kind associated with the bidder ID; and
(3) a contracting processor that performs a process of making a contract between a buying bid indicated by the buying bid information sorted in a first group among the plurality of groups and a selling bid, and a process of making a contract between a non-contracted and left selling bid and a buying bid indicated by the buying bid information sorted in a following group.

### BRIEF DESCRIPTION OF DRAWINGS

FIG. 1 is a block diagram illustrating a configuration of an electricity trading system according to a first embodiment;
FIG. 2 is a flowchart illustrating an operation of the electricity trading system according to the first embodiment;
FIG. 3 is a block diagram illustrating a configuration of an electricity trading system according to a second embodiment;
FIG. 4 is a flowchart illustrating an operation of the electricity trading system according to the second embodiment;
FIG. 5 is example buying bid information;
FIG. 6 is example bidder information stored in a bidder information database;
FIG. 7 is example selling bid information;
FIG. 8 is a block diagram illustrating a configuration of an electricity trading system according to a third embodiment;
FIG. 9 is a flowchart illustrating an operation from a setting of a contract policy to a contract process;
FIG. 10 is a block diagram illustrating a configuration of an electricity trading system according to a fourth embodiment;
FIG. 11 is a block diagram illustrating a configuration of a market providing type service system according to a fifth embodiment;
FIG. 12 is example contract result information;
FIG. 13 is a block diagram illustrating a configuration of a market providing type service system according to a sixth embodiment; and
FIG. 14 is a block diagram illustrating a configuration of a market providing type service system according to a seventh embodiment.

### DESCRIPTION OF EMBODIMENTS

Embodiments of the present disclosure will be explained below with reference to the accompanying drawings. In the following explanation for each embodiment, the portion denoted by the same reference numeral has the substantially same function, and the explanation for the duplicated portion will be omitted accordingly.

### [First Embodiment]

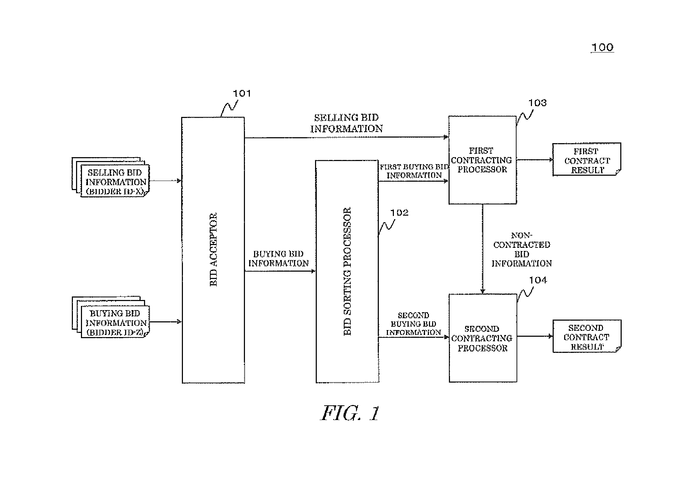

FIG. 1 is a block diagram illustrating a configuration of an electricity trading system 100 according to a first embodiment of the present disclosure. The electricity trading system 100 of the first embodiment includes a bid acceptor 101, a bid sorting processor 102, a first contracting processor 103, and a second contracting processor 104.

The electricity trading system 100 handles, as bidding target merchandise (target merchandise), not only the wholesale electricity (posiwatt) actually generated but also the electricity reduction scheduled quantity (negawatt) that is a virtual electricity. In this specification, the posiwatt and the negawatt that are merchandise subjected to a trade are collectively referred to as electricity. Bidders utilizing the electricity trading system 100 include not only a general electric power supplier and a specific electric power generator but also a general consumer who has no license for electric industry. In the following explanation, it is presumed that the bid target merchandise is the negawatt as long as it is not particularly mentioned.

The bid acceptor 101 accepts bid information containing a bidder ID to identify a bidder. The bid information is to permit a bid through the electricity trading system 100 for electricity that is target merchandise, and includes buying bid information to purchase electricity, and selling bid information to sell the electricity.

The bid information contains at least a bid target merchandise kind that indicates whether the bid is a buying bid or a selling bid, an electricity quantity per a time slot, and information on the unit price thereof. In the case of, for example, a buying bid to trade a negawatt per 30 minutes, information like "buy a 300-KWh negawatt between 14:00 and 14:30 at a unit price of JP 50 YEN/KWh" becomes the buying bid information.

A bidding to the electricity trading system 100 may be made through a terminal connected with the Internet in the form of a Web application, or may be made as a intersystem communication from a system utilized by a bidder in the form of a Web service. For example, the bidder enters information necessary for a bid, such as a time slot at which the bidder desires electricity purchase and a unit price, through a screen on the terminal, and the entered information is transmitted to the electricity trading system 100 as the bid information through the network like the Internet. The bid acceptor 101 receives bid information transmitted through the network, thereby accepting a bid.

The bid acceptor 101 transmits the buying bid information and the selling bid in the accepted bid information to the bid sorting processor 102 and the first contracting processor 103, respectively.

The bid sorting processor 102 sorts the buying bid information in the bid information accepted by the bid acceptor 101 into multiple groups based on the preference associated with the bidder ID or a bidder kind associated with the bidder ID.

The bidder kind information indicates the kind of the bidder. Each bidder is categorized based on the characteristic of that bidder, and the bidder kind indicates the category to which the bidder belongs. For example, it is presumed that the respective bidders are categorized into six categories: 1. general electric power supplier; 2. specific-scale electric power supplier; 3. large consumer; 4. middle consumer; 5. small consumer; and 6. others.

The preference is information indicating the bid preference allocated to the bidder. The preference is allocated to each bidder based on the bidder kind, a trade quantity, a trade frequency, and the like.

The bid sorting processor 102 illustrated in FIG. 1 sorts the buying bid information accepted by the bid acceptor 101 into two groups: a first group; and a second group. The bid sorting processor 102 transmits the buying bid information sorted in the first group and the buying bid information sorted in the second group to the first contracting processor 103 and the second contracting processor 104, respectively.

The first contracting processor 103 executes a processing of making a contract to the selling bid with respect to the buying bid indicated by the buying bid information sorted in the first group. The first contracting processor 103 outputs a contract result indicating each successful bid, while at the same time, transmits non-contracted bid information indicating an unsuccessful non-contracted selling bid to the second contracting processor 104.

The second contracting processor 104 executes a process of making a contract to the non-contracted selling bid unsuccessful in the first contracting processor 103 with respect to the buying bid indicated by the buying bid information sorted in the second group. The second contracting processor 104 outputs a contract result indicating each successful bid.

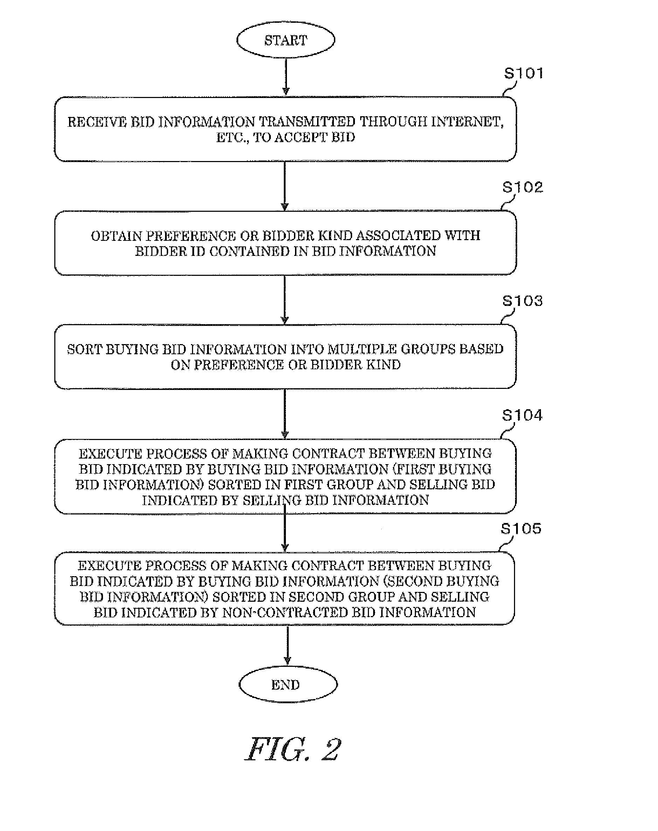

Next, an explanation will be given of an operation of the electricity trading system 100. FIG. 2 is a flowchart illustrating a flow of the operation of the electricity trading system 100.

The bid acceptor 101 accepts (step S101) bid information transmitted from the bidder utilizing the electricity trading system 100. The buying bid information and the selling bid information in the bid information accepted by the bid acceptor 101 are transmitted to the bid sorting processor 102 and the first contracting processor 103, respectively.

As a specific accepting process, the bid acceptor 101 reads the bid information received through a communication interface, and determines whether the read bid information is a buying bid or a selling bid based on the bid target merchandise kind information contained in the bid information and indicating whether it is a buying bid or a selling bid. Next, the bid acceptor 101 determines the time slot of the bid based on the bid time slot information contained in the bid information. The bid acceptor 101 stores, based on the determination result, pieces of the bid information in different memory areas in the memory for each bid kind and time slot.

The bid acceptor 101 sets a timing that is an acceptance deadline, and closes an acceptance of the bids at a time point at which it becomes the acceptance deadline. For example, the bid acceptor closes an acceptance of the bids one day before the bid time slot. When the bid time slot indicated by the bid time slot information contained in the read bid information exceeds the acceptance deadline, the bid acceptor 101 stores no bid information in the above-explained memory area. In this manner, the bid acceptor 101 determines whether or not the bid information received through the communication interface satisfies a condition associated with the predetermined bid acceptance deadline based on the bid time slot contained in the bid information, and accepts a bid when the condition is satisfied. When the bid acceptor 101 closes an acceptance of the bid at a predetermined bid time slot, the process progresses to the next sorting process.

The bid sorting processor 102 receives the buying bid information from the bid acceptor 101, and obtains (step S102) the preference associated with the bidder ID contained in the buying information or the bidder kind associated with the bidder ID.

As a specific obtaining process, the bid sorting processor 102 sequentially reads the pieces of buying bid information in the bid time slot at which the acceptance of the bids is closed from the above-explained memory area. The bid sorting processor 102 reads, from a bidder information database that stores information on bidders participating the electricity trading system 100, the value of the preference associated with the bidder ID contained in the read buying bid information or the bidder kind.

Next, the bid sorting process 102 compares the obtained preference or bidder kind with a condition set for group sorting, and sorts (step S103) the pieces of buying bid information into the multiple groups.

As a specific sorting process, the bid sorting processor 102 executes a process of comparing the value of the preference or the bidder kind read from the bidder information database in the step S102 with the sorting condition, and stores the pieces of buying bid information in the different memory areas in accordance with the comparison result, thereby sorting the pieces of buying bid information into the multiple groups. When the bid sorting processor 102 reads all pieces of buying bid information associated with the bit time slot at which the acceptance of bids is closed and the sorting process completes, the process progresses to the contract process by the first contracting processor 103.

For example, the bid sorting process 102 sorts the pieces of buying bid information into a first group and a second group. The first group is composed of buying bid information contracted preferentially, and the second group is composed of buying bid information contracted through a normal procedure. In the following explanation, the buying bid information sorted in the first group is referred to as first buying bid information, while the buying bid information sorted in the second group is referred to as second buying bid information.

As an example, it is presumed that a sorting condition is set in which the buying bid information from the bidders who are: 1. general electric power supplier: 2, specific-scale electric power supplier; and 3. large consumer is sorted in the first group, and the buying bid information from the bidders who are: 4. middle consumer; 5. small consumer; and 6. others is sorted in the second group. In this case, when the bid kind obtained in the step S102 is 1, 2, or 3, the bid sorting processor 102 sorts the buying bid information into the first group, and when the bid kind is 4, 5, or 6, the bid sorting processor sorts the buying bid information into the second group.

Next, the first contracting processor 103 performs a process of making a contract between the buying bid indicated by the buying bid information sorted in the first group by the bid sorting processor 102 and the selling bid indicated by the selling bid information accepted by the bid acceptor 101 (step S104).

As a specific contract process, the first contracting processor 103 reads the selling bid information stored in the memory through the accepting process in the step S101 and the first buying bid information with the highest preference on the contract process through the sorting process in the step S103. The first contracting processor 103 compares the respective bid prices indicated by the read selling bid information and buying bid information, and makes a contract between the buying bid and the selling bid having the bid prices matching with each other in accordance with a predetermined algorithm.

For example, the first contracting processor 103 reads the buying bid information with the lowest bid price among the first buying bid information, and determines whether or not there is selling bid information having the selling bid price set to be the lower price than the buying bid price. When there is the selling bid information satisfying the condition, the first contracting processor 103 determines that a contract can be made between those buying bid information and selling information, and stores those pieces of bid information in an already-contracted bid information memory area as fist already-contracted bid information. Conversely, when there is no bid information satisfying the condition, the first contracting processor 103 stores the buying bid information in a non-contracted bid information memory area. Next, the first contracting processor 103 reads the buying bid information having the bid price set to be the lowest among the remaining first buying bid information, and executes the above-explained comparing process. When the determining process on all first buying bid information completes, the process progresses to a contract process by the second contracting processor 104.

Subsequently, the second contracting processor 104 performs a process of making a contract between the buying bid indicated by the buying bid information sorted in the second group by the bid sorting processor 102 and the selling bid not contracted by the first contracting processor 103 (step S105).

As a specific contract process, the second contracting processor 104 reads the selling bid information stored in the memory as the non-contracted selling bid information through the contract process by the first contracting processor 103 and the buying bid information stored in the memory as the second buying bid information with the second highest preference through the sorting process in the step S103. The second contracting processor 104 compares the respective bid prices indicated by the read selling bid information and buying bid information, and making a contract between the buying bid and the selling bid having the bid prices matching with each other in accordance with the same algorithm as that of the contract process by the first contracting processor 103. The second contracting processor 103 stores the contracted bid information in the contracted bid information memory area as second contracted bid information, and stores the non-contracted buying bid information and selling bid information in an non-contracted buying bid information memory area and a non-contracted selling bid information memory area, respectively.

As explained above, the electricity trading system 100 of this first embodiment sorts the buying bid information into the multiple groups based on the preference associated with the bidder ID or the bidder kind associated with the bidder ID, and makes a contract preferentially on the buying bid from the bidder satisfying the predetermined condition. In a negawatt trading market where participation of a large number of general consumers is expected, electric power suppliers can preferentially have an opportunity to make a buying bid. Hence, it becomes possible to avoid an electricity supply tightness.

In this first embodiment, the explanation was given of an example case in which the bid sorting processor 102 sorts the buying bid information into the first group and the second group, but the present disclosure is not limited to this case. The number of groups may be expanded up to an N-th group, and the buying bid information may be sorted in groups with a further larger number of groups.

In this specification, buying bid information sorted in the N-th group by the bid sorting processor 102 will be referred to as N-th buying bid information. The bid sorting processor 102 transmits the N-th buying bid information to an N-th contracting processor, and the N-th contracting processor performs a process of making a contract on the buying bid indicated by the N-th buying bid information with respect to the selling bid not contracted through an N-1 th contracting processor. The N-th contracting processor outputs a contract result, and transmits the non-contracted bid information on the non-contracted selling bid to a following N+1 th contracting processor. Such a configuration realizes an electricity trading system with a high expandability.

In this specification, the first to N-th contracting processors may be collectively referred to as a contracting processor in some cases. The bid sorting processor 102 sorts the buying bid information into the multiple groups, and the contracting processor performs a process of making a contract between the buying bid indicated by the buying bid information sorted in the first group among the multiple group and the selling bid. Next, the contracting processor performs a process of making a contract between a left and non-contracted selling bid and the buying bid indicated by the buying bid information sorted in the follower group. As explained above, when the contract process is performed step by step for each group, the buying bid information sorted in the former group can preferentially have more opportunities to make a contract with the selling bid.

Moreover, in the above explanation, the bid sorting processor 102 sorts the buying bid into the first buying bid preferentially making a contract with the selling bid, and a second buying bid making a contract normally based on the bidder kind associated with the bidder ID contained in the buying bid information or the preference associated with the bidder ID. However, the configuration of the bid sorting processor 102 is not limited to this case.

For example, the bid sorting processor 102 may perform sorting based on, in addition to the barometer, such as the bidder kind or the preference, the bid quantity and the bid price indicated by the buying bid information. When the bid quantity contained in the buying bid information accepted by the bid acceptor 101 is larger than a predetermined reference bid quantity and a reference bid quantity defined based on other buying bid information, the bid sorting processor 102 changes the sorting destination of this buying bid information from the second group to the first group. When the bid quantity contained in the buying bid information accepted by the bid acceptor 101 is larger than the predetermined reference bid quantity or the reference bid quantity defined based on other buying bid information, the bid sorting processor 102 may change the sorting destination from the second group to the first group.

According to such a configuration, even if a bid is made by a bidder with a lower preference, when it is a large quantity buying bid or it is a bid made by a bidder who surely wants to make a bid although the contract price is high, the first contracting processor 103 that is a preferential trading market preferentially makes a contract.

Still further, in the above explanation, the bid sorting processor 102 sorts the buying bid information among the bid information accepted by the bid acceptor 101 into the multiple groups, but the present disclosure is not limited to this case. The bid sorting processor 102 may sort the selling bid information among the bid information accepted by the bid acceptor 101 into the multiple groups based on the barometer, such as the preference associated with the bidder ID or the bidder kind associated with the bidder ID.

For example, the selling bid made by a bidder with a poor reliability may be sorted to the second contracting processor 104, or when the merchandise kind is a posiwatt, the selling bid information from an electric power supplier or a bidder with a higher preference may be sorted to the first contracting processor 103 making a contract preferentially. Such a configuration further reduces the risk of electricity tightness.

### [Second Embodiment]

An electricity trading system according to this second embodiment has a function of preferentially making a contract for a general electric power supplier, etc., upon utilizing the preference allocated to each bidder. This function will be explained in more detail below with reference to the drawings. However, the explanation for the portion already explained in the first embodiment will be omitted accordingly.

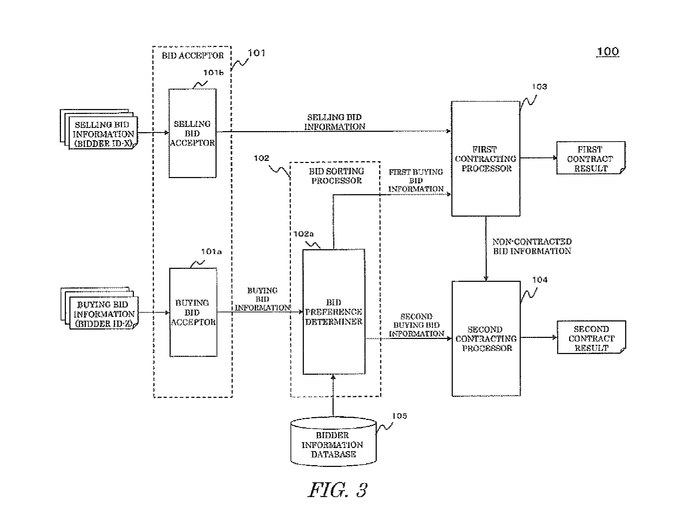

FIG. 3 is a block diagram illustrating a configuration of an electricity trading system 100 according to the second embodiment. The electricity trading system 100 includes the bidder acceptor 101, the bid sorting processor 102, the first contracting processor 103, the second contracting processor 104, and a bidder information database (DB) 105.

In the second embodiment, the bid sorting processor 102 sorting the bid information into the multiple groups based on the predetermined sorting condition includes a bid preference determiner 102a. In addition, the bid acceptor 101 includes a buying bid acceptor 101 a and a selling bid acceptor 101 b. The buying bid acceptor 101 a receives the buying bid information transmitted through the network to accept the buying bid, and transmits this buying bid information to the bid preference determiner 102a. The selling bid acceptor 101 b receives the selling bid information transmitted through the network to accept the selling bid, and transmits this selling bid information to the first contracting processor 103.

The bid preference determiner 102a sorts the buying bid information into the first group and the second group based on the preference associated with the bidder ID contained in the buying bid information accepted by the buying bid acceptor 101 a. More specifically, the bid preference determiner 102a determines the buying bid information with a preference higher than a predetermined threshold being as a first buying bid information, and determines the buying bid information with a preference lower than the predetermined threshold being as a second buying bid information. In accordance with the determination result, the bid preference determiner 102a transmits the first buying bid information and the second buying bid information to the first contracting processor 103 and the second contracting processor 104, respectively.

In order to utilize equal to or greater than three contracting processors separately, the bid preference determiner 102a may perform determination based on equal to or greater than two kinds of preference thresholds. In the following explanation, the explanation will be given of the embodiment in which the bid preference determiner 102a utilizes one preference threshold.

The first contracting processor 103 accepts the selling bid information transmitted from the selling bid acceptor 101b, and the buying bid information determined as the first buying bid information by the bid preference determiner 102a, and performs a contract process in accordance with a predetermined contract scheme. For example, the first contracting processor 103 performs a process of classifying the received buying bid information and selling bid information for each time slot at which the purchase of electricity or selling thereof is desired, and of making a contract between the buying bid and the selling bid for each time slot. The first contracting processor 103 outputs the contract result obtained through the contract process as a first contract result. In addition, the first contracting processor 103 outputs the unsuccessful selling bid to the second contracting processor 104 as non-contracted bid information.

The second contracting processor 104 accepts the non-contracted bid information transmitted from the first contracting processor 103, and the buying bid information determined as the second buying bid information by the bid preference determiner 102a, and performs a contract process in accordance with the predetermined contract scheme. The second contracting processor 104 outputs the contract result obtained through the contract process as a second contract result.

The bidder information DB 105 stores bidder information having at least the bidder ID and the preference associated with each other. The bidder information DB 105 transmits the value of the preference associated with the transmitted bidder ID to the bid preference determiner 102a in response to the access from the bid preference determiner 102a.

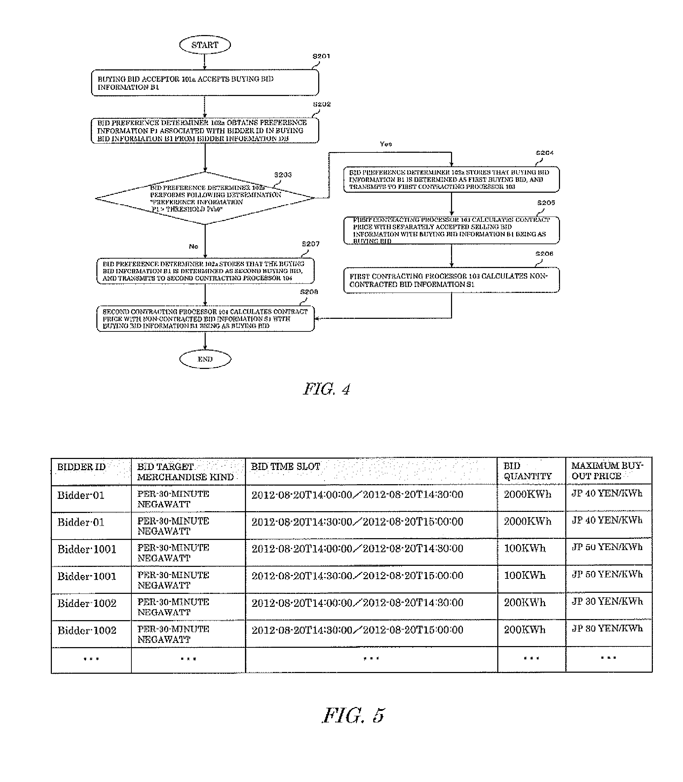

Next, an explanation will be given of an operation of the electricity trading system 100 according to the second embodiment with reference to FIGS. 3 and 4. FIG. 4 is a flowchart illustrating an operation of the electricity trading system 100 of the second embodiment.

The buying bid acceptor 101 a accepts (step S201) buying bid information B1 transmitted from the bidder utilizing the electricity trading system 100. For example, the buying bid acceptor 101a accepts the buying bids from the bidders who want to purchase electricity without making the bids distinguished, and closes an acceptance of bids when it becomes a predetermined bid deadline. Since the electricity is not trade merchandise that can be immediately reduced when a contract is made, it is appropriate if the acceptance of bids is closed at a time prior to the bid time slot by a predetermined date and hour. The buying bid information accepted by the buying bid acceptor 101 a is transmitted to the bid preference determiner 102a.

FIG. 5 illustrates example buying bid information. The buying bid information is a set of information including the bidder ID assigned by the electricity trading system 100 to identify the bidder, a bid target merchandise kind, a bid time slot for the bid target merchandise, a bit quantity, and a maximum buy-out price. The electricity trading system 100 permits bidding to multiple kinds of merchandises, and the bid target merchandise kind is information indicating the kind of the desired bid target merchandise. The bid quantity indicates the quantity of electricity subjected to a bid, and the maximum buy-out price indicates the maximum price for a desired buy-out.

Next, the bid preference determiner 102a obtains (step S202) preference information P1 associated with the bidder ID contained in the buying bid information B1 from the bidder information DB 105.

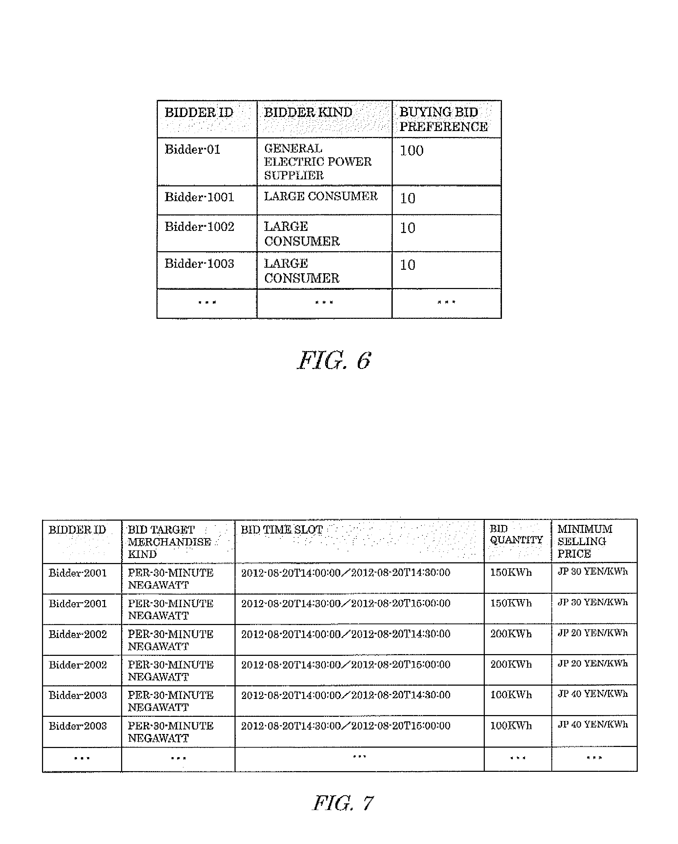

FIG. 6 illustrates example bidder information stored in the bidder information DB 105. The bidder information is a set of information including the bidder ID to identify the bidder, the bidder kind indicating the kind of the bidder, and a buying bid preference indicating the value of the preference.

When, for example, the value of the bidder ID contained in the buying bid information B1 is Bidder-1001, the bid preference determiner 102a refers to the bidder information stored in the bidder information DB 105, and obtains the preference P1 associated with the bidder ID that is Bidder-1001. When the bidder information illustrated in FIG. 6 as an example is stored in the bidder information DB 105, the preference P1 obtained by the bid preference determiner 102a is 100.

Next, the bid preference determiner 102a compares (step S203) the preference information P1 obtained in the step S202 with a threshold Pth0 set in advance in the electricity trading system 100 for a preference comparison with respect to the magnitude relation. When, for example, the value of P1 is 100 and the value of the threshold Pth0 is 50, it is determined that "P1 is larger than the threshold".

When the determination result in the step S203 is YES, the bid preference determiner 102a stores a determination result that the buying bid information B1 is determined as the first buying bid, and transmits (step S204) the buying bid information B1 to the first contracting processor 103.

Subsequently, the first contracting processor 103 calculates (step S205) a contracted price with selling bid information separately accepted by the bid acceptor 101 with the buying bid information B1 transmitted from the bid preference determiner 102a in the step S204 being as a buying bid. The first contracting processor 103 calculates the contracted price in accordance with a contract scheme, such as a single-price auction scheme that allows multiple buying bidders to make a successful bid at the same price, or a continuous session scheme that sequentially makes a contract, based on the characteristic of the trading merchandise.

FIG. 7 illustrates example selling bid information. The selling bid information is a set of information including the bidder ID assigned by the electricity trading system 100 to identify the bidder, the bid target merchandise kind, the bid time slot for the bid target merchandise, the bid quantity, and the minimum selling price. The bid quantity indicates the quantity of electricity desired to be sold, and the minimum selling price indicates the minimum price desired for a sale.

Next, the first contracting processor 103 calculates (step S206) a non-contracted bid information S1. The non-contracted bid information S1 calculated by the first contracting processor 103 in the step S206 is transmitted to the second contracting processor 104.

When the determination result in the step S203 is NO, the bid preference determiner 102a stores a determination result that the buying bid information B1 is determined as the second buying bid information, and transmits (step S207) the determination result to the second contracting processor 104.

Next, the second contracting processor 104 calculates (step S208) a contract price with the non-contracted bid information S1 calculated in the step S206 with the buying bid information B1 transmitted in the step S207 being as a buying bid. The calculation scheme of the contract price, such as the single-price auction scheme or the continuous session scheme like the step S205, is applied in accordance with the characteristic of the trading merchandise.

The contract process in the step S208 is executed after the non-contracted information S1 is output in the step S206. The acceptance of the buying bid transmitted to the first contracting processor 103 and that of the buying bid transmitted to the second contracting processor 104 are simultaneously closed by the buying bid acceptor 101a. Hence, a timing at which the non-contracted bid information S1 is output to the second contracting processor 104 may have a deadline set in accordance with the system process convenience in the order of several minutes to several hours.

When a contract is made in accordance with the continuous session scheme, if, for example, there is no buying bid process by the first contracting processor 103 with respect to the selling bid within a predetermined time, a determination may be made such that there is no contract. The first contracting processor 103 transmits the selling bid not contracted within the predetermined time to the second contracting processor 104 as the non-contracted bid.

As explained above, according to the electricity trading system 100 of the second embodiment, the preference is allocated to each bidder in advance, and the particular bidder is allowed to make a contract preferentially based on the foregoing preference. Hence, even if a large number of general consumers participate a negawatt trading market, allocation of the higher preference to the electric power suppliers allows such electric power suppliers to make a contract preferentially, thereby reducing the risk of electricity tightness. In addition, application of not the bidder kind categorized uniformly but the flexibly-changeable preference enables a flexible adjustment of an opportunity that permits the bidder to make a bid in accordance with the trading situation.

In the above explanation, the bid preference determiner 102a performs a comparison with the preset preference threshold to determine whether the buying bid information is the first buying bid information or the second buying bid information, but the present disclosure is not limited to this case. For example, the bid preference determiner 102a may perform a comparison with other buying bid information, and may determine that the buying bid information with a relatively high preference is the first buying bid information. The bid preference determiner 102a determine the buying bid information by a predetermined bid quantity with a relatively high preference among the pieces of buying bid information accepted by the buying bid acceptor 101 a as the first buying bid information, and determines the remaining buying bid information as the second buying bid information. Sorting of the buying bid information into the multiple groups based on a relative preference enables to maintain the balancing between the first contract process that is the preferential electricity trading market and the second contract process that is the normal electricity trading market.

### [Third Embodiment]

An electricity trading system according to a third embodiment has a function of controlling a difference in the successful bid prices in respective contracting processors. This will be explained in more detail below with reference to the drawings. However, the explanation for the portion already explained in the first embodiment and the second embodiment will be omitted accordingly.

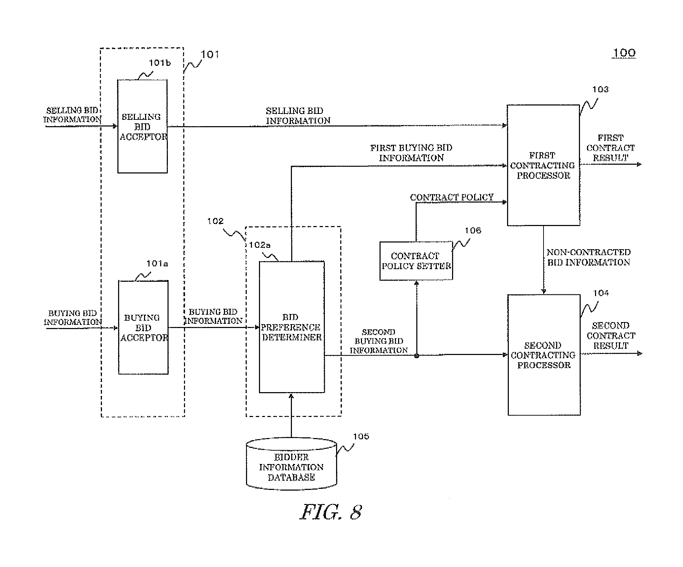

FIG. 8 is a block diagram illustrating a configuration of an electricity trading system 100 according to this third embodiment. The electricity trading system 100 includes the bid acceptor 101, the bid sorting processor 102, the first contracting processor 103, the second contracting processor 104, the bidder information DB 105, and a contract policy setter 106. The bid acceptor 101 includes the buying bid acceptor 101 a that accepts buying bid information, and the selling bid acceptor 101b that accepts selling bid information. In addition, the bid sorting processor 102 includes the bid preference determiner 102a that sorts the buying bid information into the multiple groups based on the preference associated with the bidder ID.

The contract policy setter 106 sets a contract policy to the first contracting processor 103 based on the second buying bid information output by the bid preference determiner 102a. For example, the contract policy setter 106 calculates the amount of statistics in the second buying bid information, and sets the contract policy in the first contracting processor 103 based on the calculated amount of statistics.

The contract policy indicates a condition applied when the contracting processor performs a process of making a contract between the buying bid and the selling bid. Hence, the contract process is performed in accordance with the set contract policy, and no contract which is in non-compliance with the contract policy is made. The first contracting processor 103 performs a process of making a contract between the buying bid indicated by the first buying bid information and the selling bid based on the contract policy set by the contract policy setter 106.

As a specific contract policy setting process, the contract policy setter 106 reads respective pieces of buying bid information stored in the memory as the second buying bid information. The contract policy setter 106 calculates the predetermined amount of statistics, such as the average value of the bid prices or the bid quantities in the read buying bid information and a standard deviation, generates a condition based on the amount of statistics, and stores the generated condition in the memory. The first contracting processor 103 further performs a determining process on whether or not the condition stored in the memory is satisfied when making a contract, and makes a contract between the buying bid and the selling bid with respect to the contract when determining that the condition is satisfied.

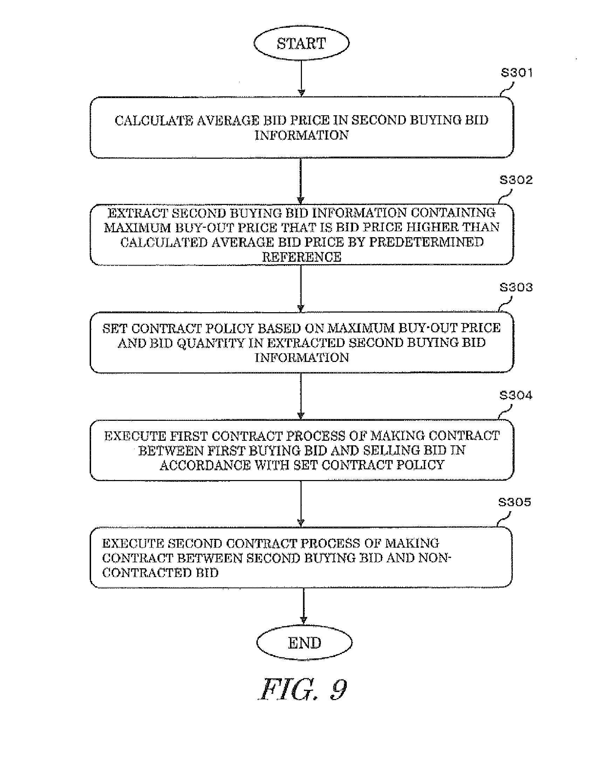

FIG. 9 is an example flowchart illustrating a flow of the successive processes from the setting of a contract policy to the contract process. The contract policy setter 106 accepts the buying bid information determined by the bid preference determiner 102a as the second buying bid information, and calculates (step S301) the average bid price in the second buying bid information.

Next, the contract policy setter 106 extracts (step S302) the second buying bid information containing, as the maximum buy-out price, the bid price higher than the average bid price calculated in the step S301 by a predetermined reference value. The reference value for the extraction is defined based on, for example, a multiplying factor or a variance value.

Next, the contract policy setter 106 sets (step S303) the contract policy based on the value obtained by multiplying the maximum buy-out price in the second buying bid information extracted in the step S302 by (e.g., JP 100 YEN/KWh), and the value of the bid quantity (e.g., 1000 KWh). The contract policy such that "the minimum price to make a successful bid when the non-contracted selling bid quantity is equal to or less than Y is X" is set to the first contracting processor 103.

The first contracting processor 103 performs the contract process (step S304) in accordance with the detail of the contract policy set by the contract policy setter 106. When there is a case that is not in compliance with the contract policy, the first contracting processor 103 performs a process that does not allow a deal with the fist buying bid. That is, when a selling bid that can make a successful bid at a price of equal to or lower than X is left but the selling bid quantity thereof is lower than Y, the first buying bid is subjected to a contract with a further higher selling bid. Hence, it is expected that equal to or greater than Y number of the non-contracted bids with a price of equal to or higher than X will be left upon the contract process by the first contracting processor 103.

The second contracting processor 104 performs a process (step S305) of making a contract between the buying bid indicated by the second buying bid information and the non-contracted bid.

As explained above, according to the electricity trading system of the third embodiment, the first contract process is performed in consideration of the second buying bid information subjected to a contract with the non-contracted selling bid. Hence, although the buying bid is to be regarded as the second buying bid, if a buying bid with a higher price is made, a further advantage is accomplished which makes such a buying bid preferentially sorted as the first buying bid. Accordingly, a way for making a successful bid to a negawatt when a general consumer really wants to purchase the negawatt is ensured within a simple trading.

The above-explained contract policy setting scheme by the contract policy setter 106 is merely an example, and the other contract policies can be set. For example, among the second buying bid information, bid information having a bid quantity equal to or greater than a predetermined ratio (e.g., equal to or greater than 10 %) relative to a first average bid quantity defined based on the record of the first buying bid information may be extracted and a similar policy may be set.

In addition, in the above explanation, the contract policy setter 106 sets the contract policy in the first contracting processor 103 based on the second buying bid information, but the present disclosure is not limited to this case. For example, the contract policy setter 106 may set a contract policy based on the selling bid information and information contained in the first buying bid information. When, for example, a non-contracted bid to be forwarded to the second contracting processor 104 cannot be acquired through a normal contract scheme in accordance with the bid quantity contained in the selling bid information and the minimum selling price, the contract policy may be changed so as to reduce a difference between the first contract result and the second contract result.

### [Fourth Embodiment]

An electricity trading system according to a fourth embodiment has a function of flexibly changing the preference referred when the bid information is sorted in the multiple groups. This will be explained in more detail below with reference to the drawings. However, the explanation for the portion already explained in the first to third embodiments will be omitted accordingly.

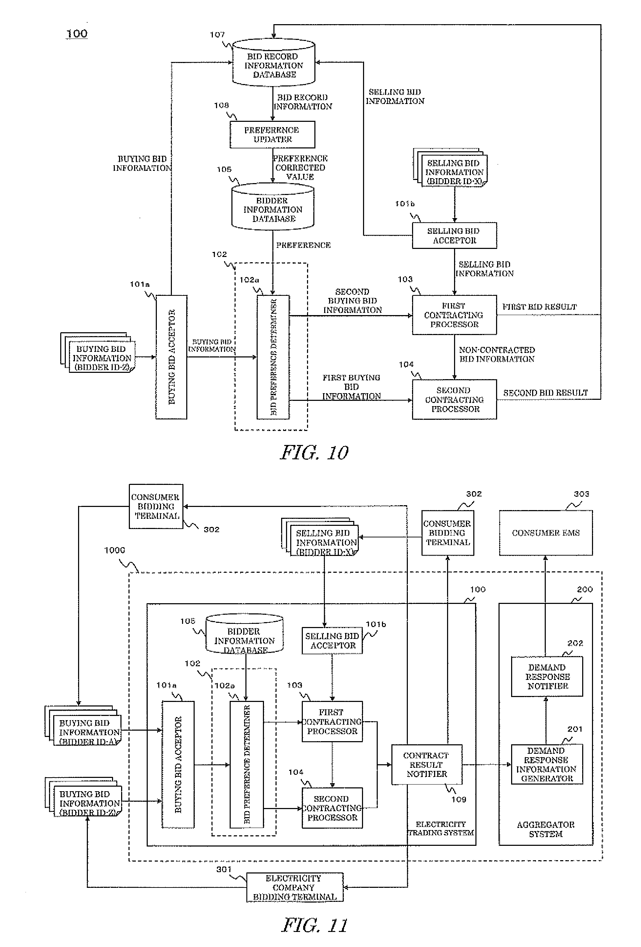

FIG. 10 is a block diagram illustrating a configuration of an electricity trading system 100 according to the fourth embodiment. The electricity trading system 100 includes the buying bid acceptor 101 a, the selling bid acceptor 101b, the bid preference determiner 102a, the first contracting processor 103, the second contracting processor 104, the bidder information database (DB) 105, a bid record information database (DB) 107, and a preference updater 108.

The bid record information DB 107 stores a bid record made to the electricity trading system 100. The bid record information DB 107 stores, as the bid record, various information, such as the buying bid information accepted by the buying bid acceptor 101 a, the selling bid information accepted by the selling bid acceptor 101b, and respective contract results obtained by the first contracting processor 103 and the second contracting processor 104.

The preference updater 108 updates the preference stored in association with the bidder ID in the bidder information DB 105 based on the bid record stored in the bid record information DB 107.

For example, the preference updater 108 enters therein the record of the selling bid information, the record of the buying bid information, the record of the first contract result, and the record of the second contract result from the bid record information DB 107, and outputs the corrected value of the preference of the bidder information to the bidder information DB 105. The bidder information DB 105 stores the corrected preference in association with the bidder ID based on the corrected value of the preference output by the preference updater 108.

The preference updater 108 updates the preference by, for example, increasing the value of the preference of the bidder having a remarkably large trading quantity within a predetermined period in the buying bid record. Alternatively, the preference updater 108 updates the preference by decreasing the preference of the bidder with a less trading frequency.

According to the electricity trading system 100 of the fourth embodiment, the preference of each bidder is flexibly changed in accordance with the bid record, etc. Hence, every time the bidder proactively participate the bidding, the preference increases, enabling the bidder to make a deal preferentially.

It is further suitable if the first contracting processor 103 and the second contracting processor 104 be configured to perform a contract process based on the preference allocated to each piece of bid information. The first contracting processor 103 and the second contracting processor 104 performs a process of making a contract with a buying bid having a higher preference when there are buying bids with the same price.

For example, it is presumed that the buying bid acceptor 101 a accepts respective buying bid information from a bidder A with a preference that is 30 associated with the bidder ID, and a bidder B with a preference that is 15 associated with the bidder ID. When the preference determination threshold in the bid preference determiner 102a is set to be 50, the two buying bid information are both determined as the second buying bid information, and transmitted to the second contracting processor 104. In this case, it is presumed that the buy-out price specified by the two buying bid information is the same price (e.g., JP 50 YEN/KWh). When there is a selling bid with a selling price of JP 50 YEN/KWh, the second contracting processor 104 first makes a contract with the buying bid indicated by the buying bid information from the bidder A who has a higher preference.

As explained above, when there are multiple buying bids with the same buy-out price, the first contracting processor 103 or the second contracting processor 104 perform a process of making a contract with the buying bid having a relatively high preference. According to such a configuration, it becomes possible to apply a penalty on the contract process to a bidder with a poor past trading record or to give a privilege on the contract process to a bidder who newly starts trading among the bids that will be regarded as the buying bid in the same category. Hence, participation to the electricity trading market is promoted, and the quality of the market participators can be ensured.

### [Fifth Embodiment]

A fifth embodiment relates to an aggregator system and a market providing type service system that generate a demand response (a demand response prompting an energy saving) based on the contract result obtained by the electricity trading system 100 explained in the aforementioned first to fourth embodiment. Those will be explained in more detail with reference to the drawings. However, the explanation for the portion already explained in the first to fourth embodiments will be omitted accordingly.

FIG. 11 is a block diagram illustrating a configuration of a market providing type service system 1000 according to this fifth embodiment. Roughly speaking, the market providing type service system 1000 includes the electricity trading system 100 mainly for a trade in negawatts, and an aggregator system 200 that provides a demand response service to consumers.

The electricity trading system 100 includes the bid acceptor 101, the bid sorting processor 102, the first contracting processor 103, the second contracting processor 104, the bidder information DB 105, and a contract result notifier 109.

The contract result notifier 109 enters therein the first contract result output by the first contracting processor 103, and the second contract result output by the second contracting processor 104, and notifies the bidder relating the contract result of such a contract result. When, for example, the bidder is an electricity company (electric power supplier), the contract result notifier notifies an electricity company bidding terminal 301 of the contract result of such an electricity company. When the bidder is a consumer, the contract result notifier notifies a consumer bidding terminal 302 of the contract result of such a consumer.

In addition, the contract result notifier 109 notifies the aggregator system 200 of the contract result of the consumer who made a selling bid.

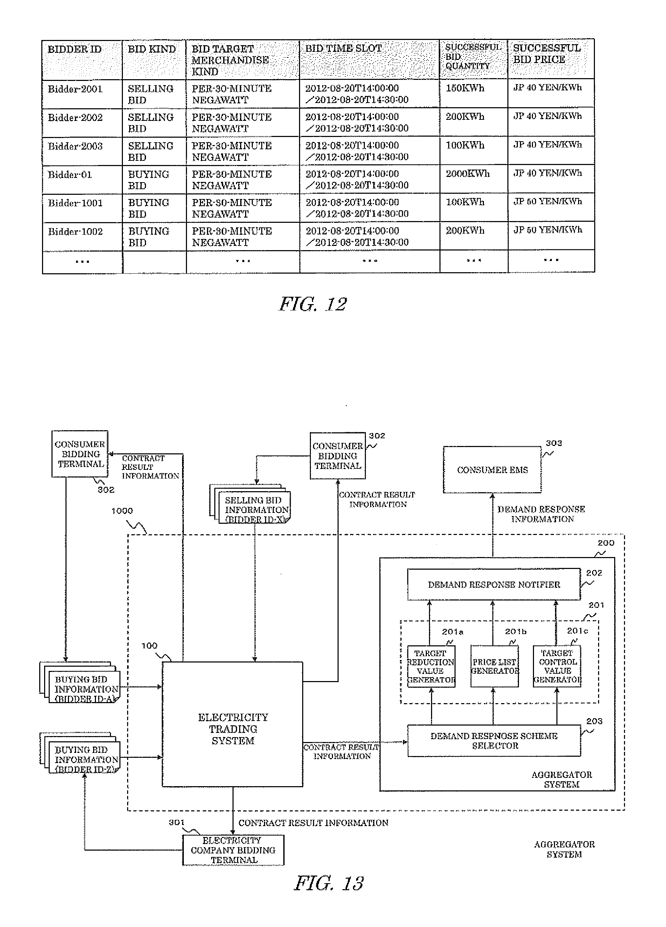

FIG. 12 illustrates an example contract result. The contract result is a set of information including the bidder ID to identify the contracted bidder, the bidder kind indicating whether the bid is for sale or buying, the bid target merchandise kind indicating the contracted bid target merchandise, the bid time slot for the bid target merchandise, a successful bid quantity, and a successful bid price. In the example illustrated in FIG. 12, the contract result notifier 109 notifies a demand response information generator 201 of the selling bid results of Bidder-2001, Bidder-2002, and Bidder-2003 as the contract results. The notified contract result contains at least the time slot of the contracted bid target merchandise, the bid quantity, and the bid price. In the case of, for example, Bidder-2001, the contract result is information containing the negawatt quantity (150 KWh) during 30 minutes from August 20, 2012, 14:00, and the unit price (JP 40 YEN/KWh).

The aggregator system 200 includes the demand response information generator 201 and a demand response notifier 202.

The demand response information generator 201 generates demand response information based on the contract result notified from the contract result notifier 109. The demand response information generator 201 generates the demand response information to obtain the negawatt of the same quantity as that of the notified contract result based on a predetermined demand response program.

The demand response notifier 202 notifies the demand response information for each consumer generated by the demand response information generator 201 to a consumer EMS (Energy Management System) 303. The consumer EMS 303 manages electricity based on the notified demand response information.

As explained above, according to the market providing type service system 1000 of this fifth embodiment, the electricity trading system 100 further includes the contract result notifier 109, and the aggregator system 200 includes the demand response information generator 201 and the demand response notifier 202. According to such a configuration, the buying bid made by the electricity company is preferentially processed over the buying bid made by the consumer. Furthermore, a successive service up to the demand response service that surely realizes the contract result can be provided. Hence, the risk of electricity tightness can be further reduced.

### [Sixth Embodiment]

According to a sixth embodiment, an aggregator system generates demand response information in accordance with a consumer EMS. This will be explained in more detail with reference to the drawings. However, the explanation for the portion already explained in the first to fifth embodiment will be omitted accordingly.

FIG. 13 is a block diagram illustrating a configuration of a market providing type service system 1000 according to this sixth embodiment. The market providing type service system 1000 includes the electricity trading system 100, and the aggregator system 200.

The electricity trading system 100 accepts bids from the electricity company bidding terminal 301 and the consumer bidding terminal 302, performs a process of making a contract between the selling bid and the buying bid, and notifies the contract result.

The aggregator system 200 includes the demand response information generator 201, the demand response notifier 202, and a demand response scheme selector 203.

The demand response scheme selector 203 selects, in accordance with a demand response scheme for each consumer, the demand response scheme to obtain the negawatt of the same quantity as that of the contract result based on the contract result for each consumer accepted from the electricity trading system 100.

The demand response information generator 201 generates the demand response information in accordance with the demand response scheme selected by the demand response scheme selector 203. In FIG. 13, the demand response information generator 201 includes a target reduction value generator 201 a, a price list generator 201 b, and a target control value generator 201 c.

The target reduction value generator 201 a sets a target reduction quantity that is a value obtained by multiplying the negawatt quantity of the contract result by a predetermined index, and generates the demand response information that is a combination of the target reduction quantity with the unit price of the negawatt. The multiplying index may be 1 when it is directly applied, or may be an index (a value larger than 1) in consideration of the variance of the actual accomplishment relative to the target reduction quantity based on the past record. When an EMS (Energy Management System) that can make a commitment to the target reduction quantity is installed at the consumer's end, the demand response scheme selector 203 selects such a demand response scheme, and the target reduction value generator 201 a generates the aforementioned demand response information.

The price list generator 201 b generates the demand response information indicating a price list having an electric power charge in the negawatt time slot in the contract result set to be higher than a normal rate. The price is set based on a correspondence table summarizing a relationship between the electric power charge and an expected reduction quantity such that "when the unit price of the electric power charge is multiplied by X times as much as a normal price, it is expected that Y % of electricity can be reduced". Such a correspondence table is obtained based on past accomplishments.

The target control value generator 201 c generates the demand response information containing a service parameter necessary for the consumer to realize the electricity reduction quantity corresponding to the negawatt quantity to a support service for the consumer (e.g., a mailing service prompting an energy saving activity or a target control value setting service for equipment instruments) for a demand response program at the consumer's end. The service parameter is set based on a correspondence table summarizing a relationship between the service parameter and the expected reduction quantity such that "when the set temperature of an air conditioner is lowered by X degrees, it is expected that an electricity reduction of Y KWh can be obtained". The correspondence table may be obtained based on past accomplishments or may be obtained based on a prediction through a control simulation.

The demand response notifier 202 notifies a consumer EMS of the demand response information for each consumer generated by any one of the target reduction value generator 201 a, the price list generator 201 b, and the target control value generator 201 c configuring the demand response information generator 201. The consumer EMS performs a predetermined operation in accordance with the received demand response information, thereby managing energy.

As explained above, the aggregator system 200 of this sixth embodiment selects the demand response scheme corresponding to the consumer EMS based on the contract result through an electricity trading to generate demand response information. According to such a configuration, it becomes possible to appropriately reduce the electricity by what corresponds to the contracted electricity reduction quantity through a demand response appropriate for each consumer.

### [Seventh Embodiment]

According to a seventh embodiment, an aggregator system places a bid for an electricity trading in place of a bidder. This will be explained in more detail with reference to the drawings. However, the explanation for the portion already explained in the first to sixth embodiments will be omitted accordingly.

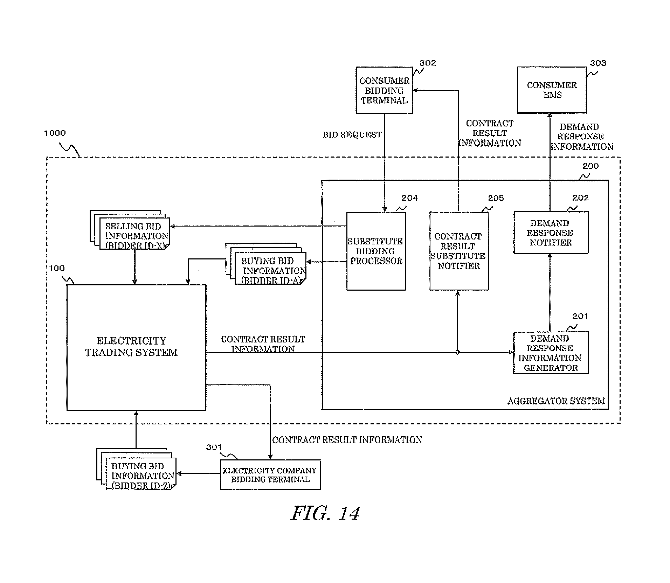

FIG. 14 is a block diagram illustrating a configuration of a market providing type service system 1000 according to this seventh embodiment. The market providing type service system 1000 includes the electricity trading system 100 and the aggregator system 200.

The electricity trading system 100 receives bid information indicating a bid for a trading merchandise that is an electricity like a posiwatt or a negawatt through the network, and makes a contract between a buying bid and a selling bid in accordance with the predetermined contract scheme, such as a single-price auction scheme or a continuous session scheme. The electricity trading system 100 transmits the contract result information indicating the contract result associated with the contracted bid to the aggregator system 200, thereby notifying the aggregator system of the contract result.

The aggregator system 200 includes the demand response information generator 201, the demand response notifier 202, a substitute bidding processor 204, and a contract result substitute notifier 205.

The substitute bidding processor 204 accepts the bid information transmitted from the consumer bidding terminal 302, and makes a bid to the electricity trading system 100 by deputy. The substitute bidding processor 204 generates the buying bid information or the selling bid information with the detail indicated by the bid information, and transmits the generated bid information to the electricity trading system 100.

The contract result substitute notifier 205 notifies the consumer of the contract result notified from the electricity trading system 100 by deputy.

As explained above, the aggregator system 200 of this seventh embodiment collects the bid information of the consumers, and makes a bid for a trade to the electricity trading system 100 in place of the consumer. In addition, the aggregator system 200 receives the notification of the contract result from the electricity trading system 100, and notifies the consumer of the contract result by deputy.

The substitute bidding processor 204 may calculate the date and hour that enables the sales of a negawatt, and the electricity quantity based on various pieces of information, such as past statistical information and weather information, and may generate selling bid information containing the minimum selling price calculated separately to make a bid. According to such a configuration, the consumer bidding terminal and the consumer EMS can be integrated.

### [Other Embodiments]

While certain embodiments have been described, these embodiments have been presented by way of example only, and are not intended to limit the scope of the disclosures. Indeed, the novel methods and apparatuses described herein may be embodied in a variety of other forms; furthermore, various omissions, substitutions and changes in the form of the embodiments described herein may be made without departing from the spirit of the disclosures. The accompanying claims and their equivalents are intended to cover such forms or modifications as would fall within the scope and spirit of the disclosures.

For example, in the above explanation, the explanation was mainly given of a case in which a negawatt is a trading merchandise, but the present disclosure is not limited to this case. A posiwatt can be a trading merchandise. In this case, with reference to the electric power supplier, the buying bid and the selling bid are in the reversed relationship. Hence, the buying bid and the selling bid in the above explanation are counterchanged in this case.

That is, an electricity trading system according to an embodiment of the present disclosure includes a bid acceptor that accepts bid information that is bid for a posiwatt and contains the bidder ID, a bid sorting processor that sorts the selling bid information among the bid information accepted by the bid acceptor into multiple groups based on the preference associated with the bidder ID or the bidder kind associated with the bidder ID, a first contracting processor that performs a process of making a contract between the selling bid indicated by the selling bid sorted in a first group and the buying bid indicated by the buying bid information accepted by the bid acceptor, and a second contracting processor that performs a process of making a contract between the selling bid indicated by the selling bid information sorted in a second group and the non-contracted buying bid not subjected to a successful bid in the first contracting processor. According to such a configuration, even if the trading merchandise is a posiwatt, an electric power supplier that can stably supply electricity is preferentially permitted to make a contract, and thus an advantage of reducing the risk of electricity tightness can be accomplished.

In addition, in the above explanation, the trading merchandise is electricity, but the present disclosure can be expanded to other merchandises with a similar trading characteristic. For example, as another embodiment of the present disclosure, it can be expanded to a trading system that has a trading merchandise which is the reduction rate of carbon dioxide.

The above-explained electricity trading system 100 and aggregator system 200 can be realized by using, for example, a general-purpose computer device as a basic hardware. That is, those can be realized by a processor built in the computer device which executes a program. In this case, the program may be installed in the computer device in advance, or the program may be stored in a memory medium like a CD-ROM, distributed over a network, and installed in a computer device as needed. In addition, a memory medium, such as an internal or external memory of the computer device, a hard disk, a CD-R, a CD-RW, a DVD-RAM, a DVD-R, may be utilized as needed.

### Reference Signs List

- 100: Electricity trading system
- 101: Bid acceptor
- 101a: Buying bid acceptor
- 101b: Selling bid acceptor
- 102: Bid sorting processor
- 102a: Bid preference determiner
- 103: First contracting processor
- 104: Second contracting processor
- 105: Bidder information database
- 106: Contract policy setter
- 107: Bid record information database
- 108: Preference updater
- 109: Contract result notifier
- 200: Aggregator system
- 201: Demand response information generator
- 201a: Target reduction value generator
- 201b: Price list generator
- 201c: Target control value generator
- 202: Demand response notifier
- 203: Demand response scheme selector
- 204: Substitute bidding processor
- 205: Contract result substitute notifier
- 301: Electricity company bidding terminal
- 302: Consumer bidding terminal
- 303: Consumer EMS
- 1000: Market providing type service system

## Claims

1. An electricity trading system comprising:
a bid acceptor that accepts bid information containing a bidder ID;
a bid sorting processor that sorts buying bid information among the bid information accepted by the bid acceptor into a plurality of groups based on a preference associated with the bidder ID or a bidder kind associated with the bidder ID; and
a contracting processor that performs a process of making a contract between a buying bid indicated by the buying bid information sorted in a first group among the plurality of groups and a selling bid, and a process of making a contract between a left selling bid without being contracted and a buying bid indicated by the buying bid information sorted in a following group.

2. The electricity trading system according to claim 1, wherein:
the bid sorting processor sorts the buying bid information among the bid information accepted by the bid acceptor into two groups that are the first group and a second group based on the preference associated with the bidder ID or the bidder kind associated with the bidder ID; and
the contracting processor comprises:
a first contracting processor that performs a process of making a contract between a buying bid indicated by the buying bid information sorted in the first group and a selling bid; and
a second contracting processor that performs a process of making a contract between a buying bid indicated by the buying bid information sorted in the second group and a selling bid not contracted by the first contracting processor.

3. The electricity trading system according to claim 2, wherein:
the bid sorting processor comprises a bid preference determiner which determines that the buying bid information with a higher preference than a predetermined threshold among the bid information accepted by the bid acceptor as first buying bid information, and determines that the buying bid information with a lower preference than the predetermined threshold as second buying bid information based on the preference associated with the bidder ID;
the first contracting processor performs a process of making a contract between a buying bid indicated by the first buying bid information and the selling bid; and
the second contracting processor performs a process of making a contract between a buying bid indicated by the second buying bid information and the non-contracted bid not subjected to a successful bid through the first contracting processor.

4. The electricity trading system according to claim 3, further comprising a bidder information memory that stores bidder information having the bidder ID and the preference associated with each other,
wherein the bid preference determiner refers to the bidder information stored in the bidder information memory to obtain the preference associated with the bidder ID contained in the buying bid information accepted by the bid acceptor.

5. The electricity trading system according to claim 3 or 4, further comprising a contract policy setter that calculates a predetermined amount of statistics in the buying bid information sorted in the second group, and sets a contract policy in the first contracting processor based on the calculated amount of statistics,
wherein the first contracting processor performs a process of making a contract between a buying bid indicated by the first buying bid information and a selling bid based on the contract policy set by the contract policy setter.

6. The electricity trading system according to any one of claims 1 to 5, wherein:
the bid information contains a negawatt per a time slot, that isscheduled electricity reduction quantity , and a negawatt price; and
the contracting processor performs a process of making a contract between the buying bid and the selling bid through a single-price auction scheme or a continuous session scheme.

7. The electricity trading system according to any one of claims 1 to 6, further comprising:
a bid record memory that stores a bid record; and
a preference updater that updates the preference in the bidder information stored in the bidder information memory based on the bid record.

8. The electricity trading system according to claim 7, wherein when there are a plurality of buying bids at a same buy-out price, the contracting processor performs a process of making a contract with the buying bid having the relatively high preference among the plurality of buying bids.

9. A market providing type service system comprising an electricity trading system that carries out an electricity trading, and an aggregator system that provides a demand response service to a consumer, wherein:
the electricity trading system comprises:
a bid acceptor that accepts bid information containing a bidder ID;
a bid sorting processor that sorts buying bid information among the bid information accepted by the bid acceptor into a plurality of groups based on a preference associated with the bidder ID or a bidder kind associated with the bidder ID;
a contracting processor that performs a process of making a contract between a buying bid indicated by the buying bid information sorted in a first group among the plurality of groups and a selling bid, and a process of making a contract between a non-contracted and left selling bid and a buying bid indicated by the buying bid information sorted in a following group; and
a contract result notifier that notifies of a contract result through the contracting processor, and
the aggregator system comprises:
a demand response information generator that generates demand response information based on the contract result notified from the contract result notifier; and
a demand response notifier that notifies of the generated demand response information.
